# EUROPEAN PATENT APPLICATION

(11) **EP 2 615 828 A1**
(43) Date of publication of application: **17.07.2013**
(21) Application number: 13162929.7
(22) Date of filing: 23.12.2010
(51) Int. Cl.: H04N 5/765, H04N 5/00, H04N 5/783, H04N 21/432, H04N 21/433, H04N 21/436, H04N 21/443

(54) **Method and system for allowing users to resume viewing videos among set-top boxes**

(30) Priority: 23.12.2009 KR 20090129781
(62) Divisional of application: 10196800.6
(71) Applicant: Samsung Electronics Co., Ltd, Gyeonggi-do 443-742 (KR)
(72) Inventor: Kim, Si Heung, 506-762 Gyeonggi-do (KR)
(74) Representative: Grünecker, Kinkeldey, Stockmair & Schwanhäusser

(57) **Abstract**

An apparatus, in a system formed by a second client and at least one first client able of providing a service for resuming video viewing in the first client, the first client comprises a memory module comprising limited available storage capacity, a network interface module for performing network communication, and a playback module for playing back received frames via the network interface module, the apparatus characterized by comprising: an index processor module for receiving an index file comprising running times of respective frames in a video, from the second client, via the network interface module, and for requesting frames from the second client following the frame corresponding to a desired time point, based on the running times of the received index file, according to the available storage capacity, wherein the second client stores a file of the video forming content.

## Description

### PRIORITYBACKGROUND OF THE INVENTION

### 1. Field of the Invention:

This invention relates to Set-Top Boxes (STBs). More particularly, the present invention relates to a method and system that allows a sub STB to resume playing back a program that has been played back in a main STB.

### 2. Description of the Related Art:

Digital broadcasting is classified into digital terrestrial broadcasting, digital satellite broadcasting, cable digital broadcasting, and the like, according to transmission media. In digital broadcasting, programs by respective channels are compressed according to a standard format of a Moving Picture Experts Group (MPEG), multiplexed according to digital modulation modes and then transmitted. Unlike analogue broadcasting, digital broadcasting can broadcast digital data via tens to hundreds of channels, without using a plurality of repeaters.

A video resuming service according to the related art is performed between a server that provides contents and a client, i.e., a STB. However, the contents are not shared among STBs. Although the contents are shared with STBs, the level of sharing is simply transmission. Therefore, a service is required to share contents with STBs in real-time.

### SUMMARY OF THE INVENTION

An aspect of the present invention is to address at least the above-mentioned problems and/or disadvantages and to provide at least the advantages described below. Accordingly, an aspect of the present invention is to provide a method and system that can allow a user to directly play back corresponding content at a desired time point in a Set-Top Box (STB) that differs from another STB that stores the corresponding content, wherein the STB and the other STB share contents with each other.

In accordance with an aspect of the present invention, a system for providing a service for resuming video viewing in a sub STB is provided. The system includes a memory module with limited available storage capacity, a network interface module for performing network communication, an index processor module and a playback module. The index processor module receives an index file, containing running times of respective frames in a video, from a main STB, via the network interface module. The index processor module also requests corresponding frames from the main STB, based on the running times of the received index file, according to the available storage capacity, wherein the main STB stores a file of the video forming the content. That playback module plays back the received frames via the video.

The corresponding frame may include a paused frame in the video that the main STB temporarily stopped playing back.

The corresponding frames may be part of successive frames, which are selected when a user executes a trick mode and are not located adjacent to each other.

In accordance with another aspect of the present invention, a system for providing a service for resuming video viewing in a main STB is provided. The system includes a storage unit for storing a video and an index file containing running times of frames in the video, an interface unit for transmitting the index file, an index processor for extracting corresponding frames from the frames of the video, based on the running times, according to a request of a sub STB, and a playback unit for playing back the extracted frames.

The corresponding frame may include a paused frame in the video that the main STB temporarily stopped playing back.

The corresponding frames may be part of successive frames, which are selected when a user executes a trick mode and are not located adjacent to each other.

In accordance with still another aspect of the present invention, a method for providing a service for resuming video viewing in a sub STB is provided. The system includes receiving an index file, containing running times of respective frames in a video, from a main STB, via a network interface module, wherein the main STB stores a file of the video forming content, requesting corresponding frames from the main STB, based on the running times of the received index file, according to a user's request, and playing back the corresponding frames of the video.

The video may include a paused video that the main STB temporarily stopped playing back.

The corresponding frames may be part of successive frames, which are selected when a user executes a trick mode and are not located adjacent to each other.

In accordance with yet another aspect of the present invention, a method for providing a service for resuming video viewing in a main STB is provided. The method includes transmitting an index file containing running times of respective frames forming the video to a sub STB, and extracting corresponding frames from the frames of the video, based on the running times, according to a request from the sub STB, and transmitting the frames to the sub STB.

The video may include a paused video that the main STB temporarily stopped playing back.

The corresponding frames may be part of successive frames, which are selected when a user executes a trick mode and are not located adjacent to each other.

In accordance with a further aspect of the present invention, a method for providing a service for resuming video viewing in a STB is provided. The method includes transmitting an index file comprising running times of respective frames forming a video to a sub STB, receiving the index file from a main STB via a network interface module, wherein the main STB stores a file of the video forming content, requesting corresponding frames from the main STB, based on the running times of the received index file, according to a request, extracting the corresponding frames from the frames of the video, according to the request, and transmitting the frames to the sub STB, and playing back the corresponding frames of the video.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following detailed description in conjunction with the accompanying drawings, in which:

FIG. 1 illustrates a schematic block diagram of a digital broadcast system according to an exemplary embodiment of the present invention;

FIG. 2 illustrates a transport stream file structure according to an exemplary embodiment of the present invention;

FIG. 3 illustrates a schematic block diagram of a system for providing a service for resuming viewing of a video in a main Set-Top Box (STB) according to an exemplary embodiment of the present invention;

FIG. 4 illustrates a schematic block diagram of a system for providing a service for resuming viewing of a video in a sub STB according to an exemplary embodiment of the present invention;

FIG. 5 illustrates a signal flowchart describing a method for resuming playing back videos between a sub STB and a main STB according to an exemplary embodiment of the present invention;

FIG. 6 illustrates a flowchart describing a method for resuming playing back videos in a main STB according to an exemplary embodiment of the present invention; and

FIG. 7 illustrates a flowchart describing a method for resuming playing back videos in a sub STB according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

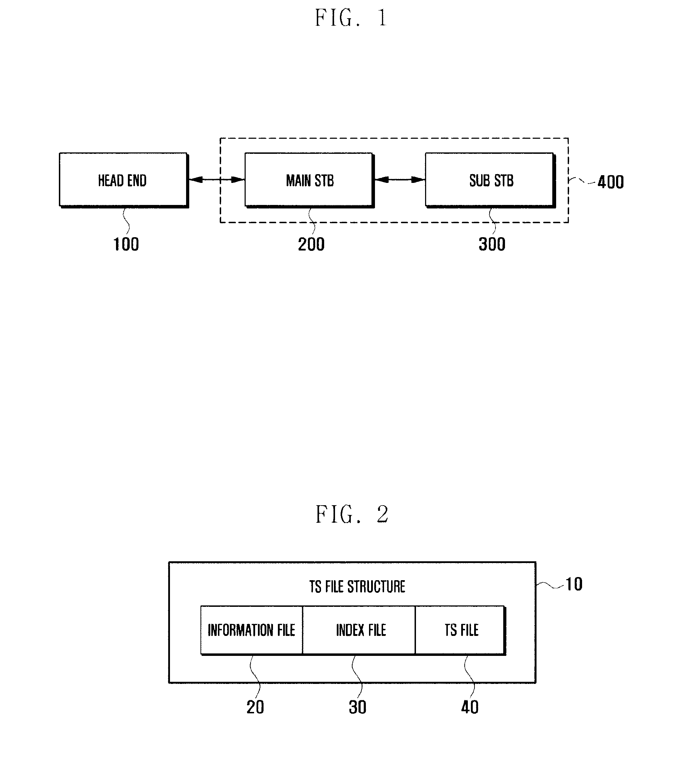

FIG. 1 illustrates a schematic block diagram of a digital broadcast system according to an exemplary embodiment of the present invention.

Referring to FIG. 1, the digital broadcast system includes a head end 100 and a Set-Top Box (STB) 400. In an exemplary implementation, for convenience, the STB 400 is divided into a main STB 200 and a sub STB 300. The main STB 200 receives video signals from the head end 100 and plays them back. When the main STB 200 pauses playback of the received video signals, the sub STB 300 may resume playing back the video following a point where the main STB 200 has paused, so that the user may view the video via the screen.

The head end 100 transmits video signals as digital broadcast contents. Video signals are created via Transport Stream (TS) files. The head end 100 transmits the video signals, via the TS files, to the main STB 200. The head end 100 processes data uploaded by a subscriber's main STB 200.

The main STB 200 receives the TS files from the head end 100, stores video signals contained in the received TS files, and plays them back. The main STB 200 creates an index file as information about playback time of each frame in the video signals. The main STB 200 shares the created index file with the sub STB 300.

The sub STB 300 receives an index file of video signals from the main STB 200. The sub STB 300 refers to the index file of a video, requests a frame for the video signal, and plays back the requested frame. In an exemplary implementation, the STB 400 may be implemented with a number of sub STBs.

In order to resume video signals, information is needed about playback time of frames comprising each scene in the video signals. A TS file structure according to an exemplary embodiment of the present invention is provided below with reference to FIG. 2.

FIG. 2 illustrates a TS file structure according to an exemplary embodiment of the present invention.

As illustrated in FIG. 2, the main STB 200 receives contents with video signals from the head end 100, creates the TS file structure 10 from the received video signals, and stores them.

The TS file structure 10 includes an information file 20, an index file 30 and a TS file 40.

The information file 20 contains contents contained in the TS file 40, i.e., information about videos. The information file 20 serves to distinguish between videos. For example, the information file 20 contains Program IDentification (PID), a PID type, a PID number, a File size, a Number of TS chunk, and the like.

The TS file 40 includes a number of files. For example, one video is recorded by a number of TS files 40. Each of the TS files 40 contains a number of frames.

The index file 30 records information about an elapsed time corresponding to a time that each of a number of frames is played back. An example of the index file 30 is shown below in Table 1.

**[Table 1]**

| Frame sequence | 1 | 2 | 3 | 4 | 5 | 6 | 7 | 8 | 9 | 10 | 11 |
|---|---|---|---|---|---|---|---|---|---|---|---|
| Frame types | I | B | B | P | B | B | P | I | B | B | P |
| Running time (of each frame) | Time 1 | Time 2 | Time 3 | Time 4 | Time 5 | Time 6 | Time 7 | Time 8 | Time 9 | Tim e 10 | Time 11 |
| Frame sequence | 12 | 13 | 14 | 15 | 16 | 17 | 18 | 19 | 20 | 21 | - |
| Frame types | B | B | P | I | B | B | P | I | B | B | - |
| Running time (of each frame) | Time 12 | Time 13 | Time 14 | Time 15 | Time 16 | Time 17 | Time 18 | Time 19 | Time 20 | Time 21 | - |

Table 1 shows frames of the TS file 40 and elapsed times. The frames map to running times, respectively. Running time refers to a time that each of the frames in the TS file 40 is played back at a normal speed (1 x speed). The index file 30 contains information about running times (Time 1 to Time 19) and frames mapped thereto. Each of Time 1 to Time 19 refers to a running time for a corresponding frame, where the unit of time may be assigned to each frame when a video is produced. For example, if it is assumed that it takes 1/36 second to play back one frame, Time 1 may be 1/36 second, Time 2 may be 2/36 seconds, and the like.

The main STB 200 transfers an index file 30 of a particular video to the sub STB 300 and shares it therewith together. When a user requests playback in a normal mode or a trick mode, the main STB 200 extracts a corresponding frame from the TS file 40, referring to the index file 30, and plays it back. In addition, the sub STB 300 may request a corresponding frame from the main STB 200, referring to the index file 30.

A normal mode refers to a mode where a video is played back at normal speed. A trick mode refers to a mode where the playback order of frames of a video is controlled while they are being played back at a normal speed, thereby acquiring various types of operations. Examples of the operations in the trick mode include a reverse playback, a forward playback with a low speed, a reverse playback with a low speed, a forward playback with a high speed, a reverse playback with a high speed, a still image playback, and the like.

For example, when a user requests the forward playback with the high speed in the trick mode at the main STB 200 or the sub STB 300, the STB plays back only part of the frames at the requested speed and may skip the other part of the frames.

Referring to Table 1, when a user requests a two times speed, the main STB 200 or the sub STB 300 plays back only every second one of the 1-frames, 1, 8, 15, and 19, i.e., I-frame 8 and I-frame 19, but does not play back I-frames 1 and 15. In this case, the main STB 200 or the sub STB 300 may search I-frames 8 and 19, based on running time, and play them back. That is, the main STB 200 or sub STB 300 may acquire running times 8 and 19 at every second I-frame in a video, so that it may extract only I-frames 8 and 19 from the TS file 40 and play them back. Likewise, in the operation at the second times speed described above, the main STB 200 or the sub STB 300 may also be operated at the other speeds in the same way as well. For example, when a user requests a three times speed, the main STB 200 or the sub STB 300 plays back only every third one of the I-frames, 1, 8, 15, and 19, i.e., I-frame 15, but does not play back the remaining I frames 1, 8, and 19.

In an exemplary embodiment of the present invention, in another trick mode, the main STB 200 or the sub STB 300 may extract corresponding frames from the index file 30 and play them back. When a user executes the trick mode in the sub STB 300, the sub STB 300 requests a corresponding frame from the main STB 200. In this case, the main STB 200 extracts the frame from an index file 30 and transfers it to the sub STB 300. The sub STB 300 receives the frame from the main STB 200 and plays it back or stores it.

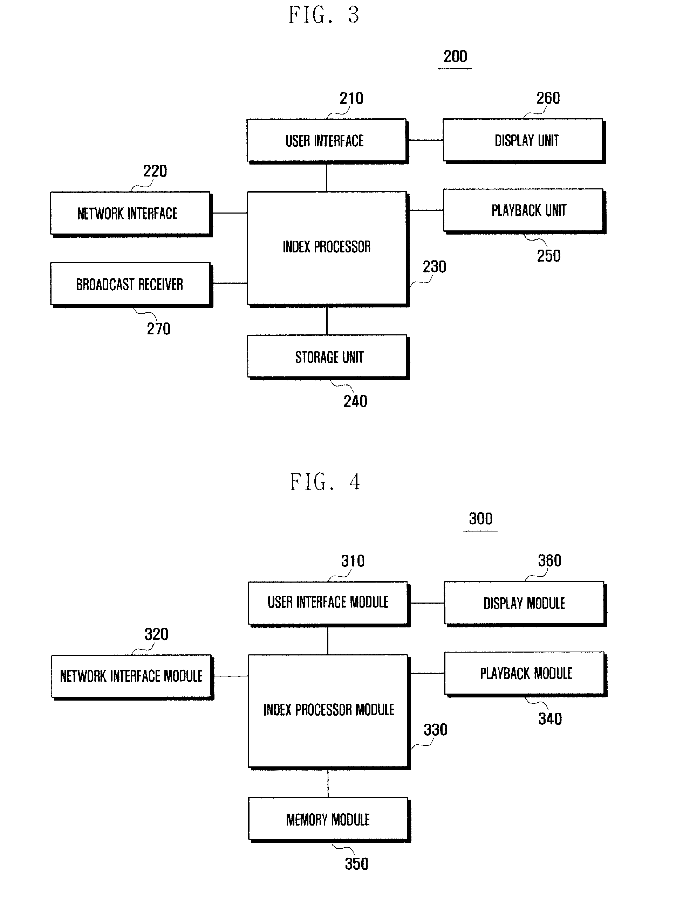

FIG. 3 illustrates a schematic block diagram of a system for providing a service for resuming viewing of a video in a main STB according to an exemplary embodiment of the present invention.

Referring to FIG. 3, the main STB 200, directly receiving contents from the head end 100, includes a user interface 210, a network interface 220, an index processor 230, a storage unit 240, and a playback unit 250. The main STB 200 further includes a display unit 260 separately or integrally installed thereto. The main STB 200 may also include a broadcast receiver 270 that receives digital broadcast contents from the head end 100.

The user interface 210 allows a user to input signals for operating the main STB 200. The user interface 210 may be implemented with various types of keys installed to the main STB 200 or a remote controller for remotely controlling the main STB 200. In an exemplary implementation, the user interface 210 includes a number of keys for allowing a user to execute various functions, such as, playback, stop, pause, and the like.

The network interface 220 interfaces between the main STB 200 and the sub STB 300 to perform communication therebetween. The network interface 220 transfers messages between the main STB 200 and the sub STB 300. The network interface 220 also transfers data containing TS files, index files, and the like between the main STB 200 and the sub STB 300.

The index processor 230 receives contents, for example, creates the TS file structure 10, illustrated in FIG. 2, and stores it in the storage unit 240.

The index processor 230 receives an inquiry message from the sub STB 300 and includes frames for playing back a currently paused video, and index files in a reply message. Thereafter, the index processor 230 transfers the reply message to the sub STB 300 via the network interface 220.

When the index processor 230 receives a request from the sub STB 300, the index processor 230 searches for the frame, requested by the sub STB 300, from the index file 30. The index processor 230 searches for and extracts the frame from the TS file 40 and transfers the extracted frame to the sub STB 300 via the network interface 220.

In addition, when the index processor 230 receives a request for executing a normal mode or a trick mode from a user, it searches for a corresponding frame from the index file 30 in the storage unit 240. The index processor 230 searches for and extracts the frame from the TS file 40 and provides it to the playback unit 250.

The playback unit 250 receives the frame from the index processor 230 and plays it back.

The storage unit 240 stores a TS file structure 10. The storage unit 240 may be implemented with a hard disk. As described above with reference to FIG. 1, the TS file structure 10 contains an information file 20, an index file 30, and a TS file 40.

The display unit 260 displays videos of frames played back by the playback unit 250. The display unit 260 may be implemented in such a way to include the main STB 200. Alternatively, the display unit 260 may be implemented with a separated device that may be connected to the main STB 200.

FIG. 4 illustrates a schematic block diagram of a system for providing a service for resuming viewing of a video in a sub STB according to an exemplary embodiment of the present invention.

As described above, the sub STB 300 refers to a STB that may resume playing back the video following a point where the main STB 200 or another sub STB is paused, where the sub STB 300 may also be configured in such a way that it does not directly receive contents from the head end 100.

Referring to FIG. 4, the sub STB 300 includes a user interface module 310, a network interface module 320, an index processor module 330, a playback module 340, and a memory module 350. The sub STB 300 may further include a display module 360 integrally installed thereto. Alternatively, the display module 360 may be separately installed to the sub STB 300.

The user interface module 310 allows a user to input signals for operating the sub STB 300. The user interface module 310 may be implemented with various types of keys installed to the sub STB 300 or a remote controller for remotely controlling the sub STB 300. In an exemplary implementation, the user interface module 310 includes a number of keys that allow a user to execute a normal mode or a trick mode.

The network interface module 320 interfaces between the main STB 200 and the sub STB 300 to perform communication therebetween. The network interface module 320 transfers messages between the main STB 200 and sub STB 300. The network interface module 320 also transfers data containing TS files, index files, and the like between the main STB 200 and the sub STB 300.

The index processor module 330 creates a message for inquiring the sub STB 300, according to a user's input detected by the user interface module 310, and transfers it thereto. As described above, the index processor 230 of the main STB 200 receives the inquiry message and transfers a reply message thereto. The reply message contains an index file 30 of a video and frames required to play back a paused video.

The index processor module 330 transfers a message for requesting frames following the frame of a stopped video to the main STB 200 via the network interface module 320, thereby resuming viewing of the stopped video. That is, the index processor module 330 may request frames according to a user's input, based on the running time of the received still image frame via the reply message. For example, when a user executes a trick mode, the index processor module 330 requests a corresponding frame from the main STB 200, referring to the index file 30 in the trick mode. The main STB 200 extracts a corresponding frame and transfers it to the sub STB 300. The sub STB 300 receives the frame via the network interface module 320 and stores it in the memory module 350.

The index processor module 330 extracts a corresponding frame from a TS file 40 in the memory module 350, according to a user's request, and outputs it to the playback module 340. The index processor module 330 deletes frames from the lowest availability from the memory module 350, based on a certain reference, thereby securing the capacity of availability in the memory module 350.

The playback module 340 plays back the received frames.

The memory module 350 temporarily stores the index files of a video and part of an entire frame. Since the memory module 350 has a limited capacity of availability, it may store only part of the entire frame when one video is played back.

The display module 360 displays videos of frames played back by the playback module 340. The display module 360 may be implemented in such a way to include the sub STB 300. Alternatively, the display module 360 may be implemented with a separate device that may be connected to the sub STB 300.

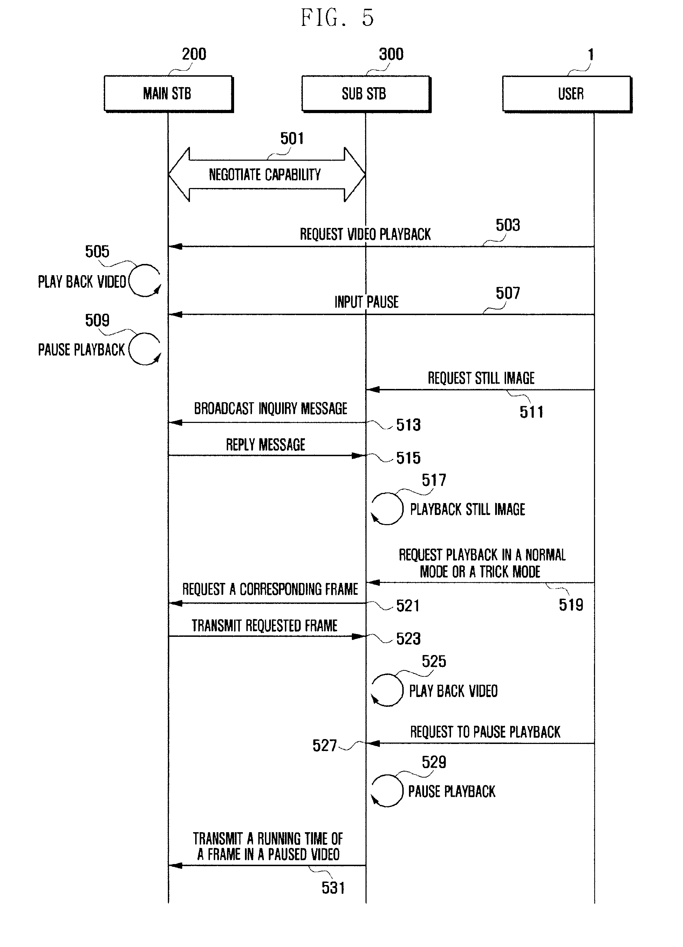

FIG. 5 illustrates a signal flowchart describing a method for resuming playing back videos between a sub STB and a main STB according to an exemplary embodiment of the present invention.

Referring to FIG. 5, the main STB 200 and the sub STB 300 transfer network information and information about their storage media and capacities to each other, which is called performing a capability negotiation process via a handshake, at step 501.

During the capability negotiation, the main STB 200 and the sub STB 300 transfer network information for mutual communication to each other. The network information contains a communication protocol, which may be shared by the main STB 200 and the sub STB 300, and information for identifying the main STB 200 and the sub STB 300. In an exemplary implementation, the communication protocol may be a Transmission Control Protocol/Internet Protocol (TCP/IP). In this case, the identification information may be IP addresses of the main STB 200 and the sub STB 300.

Capability negotiation may be achieved as the main STB 200 and the sub STB 300 broadcast their network information to other STBs in their transport coverage. Since the main STB 200 and the sub STB 300 mutually detect opposite party's network information, when the sub STB 300 intends to resume playing back the following portion of the video that the main STB 200 stopped playing back, it may search the main STB 200 based on the network information.

In addition, during the capability negotiation, the main STB 200 and the sub STB 300 also transfer information about their storage media, storage capacity, and available storage capacities to each other. The main STB 200 and the sub STB 300 transfer information as to whether they have storage media to each other. When the main STB 200 and the sub STB 300 detect that they have the storage media, they also transfer information about their available storage capacities to each other. For example, the main STB 200 and the sub STB 300 may transfer information as to whether they have a hard disk or memory to each other. In addition, when the main STB 200 and the sub STB 300 detect that they have a hard disk or memory, they also transfer information to each other about their available storage capacities that may be secured in order to transmit or receive data.

Thereafter, a user 1 requests to play back a stored video from the main STB 200 at step 503. The main STB 200 plays back stored contents according to the user's request at step 505. The user 1 may view the contents, played back by the main STB 200, via the display connected to the main STB 200.

The user 1 may input a pause to temporarily stop playing back the contents in the main STB 200 at step 507. In this case, the main STB 200 pauses playing back the contents at step 509. The main STB 200 displays a still image on the display connected thereto.

In order to resume viewing the paused contents that the main STB 200 temporarily stopped playing back, the user 1 requests to play it back from the sub STB 300 at step 511. In this case, the sub STB 300 broadcasts a message inquiring about the main STB 200 including the paused contents, i.e., video at step 513. The main STB 200 receives the inquiry message and transmits a reply message to the sub STB 300 at step 515. The reply message contains an index file of the video and frames required to play back the currently paused video. The sub STB 300 receives the reply message and plays back the same still image as that of the main STB 200 at step 517.

In this case, the user 1 may view the same still image, via the display module of the sub STB 300, as he/she viewed via the display unit of the main STB 200. Therefore, the user 1 may recognize that he/she has resumed viewing the contents that the main STB 200 stopped playing back, via the sub STB 300.

When the user 1 executes the sub STB 300 in a normal mode or a trick mode at step 519, the sub STB 300 requests a corresponding frame from the main STB 200 at step 521. Requesting a frame may be achieved as the sub STB 300 refers to the index file 30, detects a running time corresponding to the frame, and transfers a request message containing the running time to the main STB 200.

The main STB 200 extracts the requested frame and transfers it to the sub STB 300 at step 523.

The sub STB 300 plays back the received frame, thereby displaying a video, at step 525.

When the user 1 requests a pause to temporarily play back the video from the sub STB 300 at step 527, the sub STB 300 pauses playing back the video at step 529. Thereafter, the sub STB 300 transfers the running time of the frame in the paused video to the main STB 200 at step 531.

Thereafter, the main STB 200 may resume playing back the video from the point of the video that the sub STB 300 stopped playing back, based on the running time transmitted from the sub STB 300.

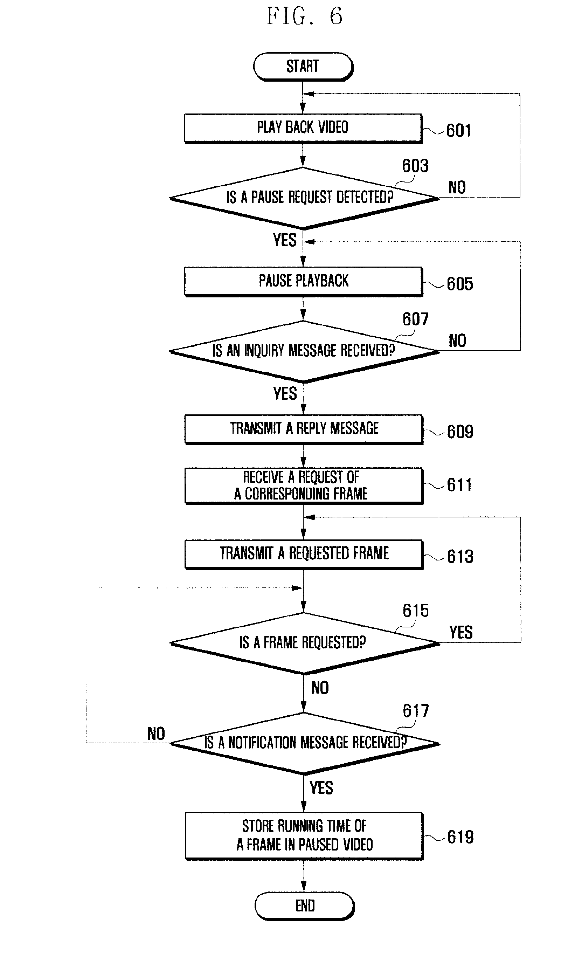

FIG. 6 illustrates a flowchart describing a method for resuming playing back videos in a main STB according to an exemplary embodiment of the present invention. It is assumed that the main STB 200 and the sub STB 300 have performed a capability negotiation process.

Referring to FIG. 6, the main STB 200 plays back a video at step 601. In an exemplary implementation, a video contains content. When the main STB 200 detects a pause input by the user while playing back the video at step 603, it temporarily stops playing back the video and displays a still image at step 605.

The user may request to resume playing back the video following the still image in the video, displayed on the main STB 200, from the sub STB 300. In that case, the sub STB 300 searches the main STB 200 that currently displays the still image. Searching the main STB 200 may be achieved as the sub STB 300 broadcasts an inquiry message.

When the main STB 200 receives the inquiry message at step 607, the main STB 200 transmits a reply message to the sub STB 300 at step 609. The reply message contains an index file 30 of the video and frames required to play back the paused video.

The sub STB 300 plays back the paused video. After recognizing the paused video, the user may request the playback of the video in a normal mode or a trick mode from the sub STB 300. In this case, the sub STB 300 searches corresponding frames from the index file 30 and requests the searched frames from the main STB 200.

When the main STB 200 receives a request transmitted from the sub STB 300 at step 611, it extracts the requested frames and transmits them to the sub STB 300 at step 613. Transmitting the requested frames to the sub STB 300 is performed, based on the available storage capacity of the memory module 350 that the sub STB 300 has secured in the capability negotiation process.

The sub STB 300 receives the requested frames by the available storage capacity and stores them in the memory module 350. Thereafter, the sub STB 300 plays back the stored frames according to the frame order. The played frames are removed from the memory module 350. In this case, the memory module 350 may re-secure the capacity corresponding to the amount of deleted frames. The sub STB 300 re-requests corresponding frames from the main STB 200.

The main STB 200 determines whether the sub STB 300 requests frames at step 615. If it is determined that the sub STB 300 requested frames from the main STB 200 at step 615, the main STB 200 transmits the requested frames to the sub STB 300 at step 613.

On the contrary, if the main STB 200 determines that the sub STB 300 has not requested frames at step 615, it determines whether to receive a notification message stating that the sub STB 300 stopped playing back the video at step 617. If it is determined that the sub STB 300 pauses playing back the video, it transmits the running time of the frame in the paused video, via the notification message, to the main STB 200.

If it is determined that the main STB 200 has not received the notification message at step 617, it returns to step 615 to determine whether the sub STB 300 requests frames. On the contrary, if it is determined that the main STB 200 has received the notification message at step 617, it detects the running time of the frame in the paused video that the sub STB 300 stopped playing back, via the notification message, and stores the detected running time at step 619. The stored running time may be used when the main STB 200 resumes playing back the video following the portion of the video that the sub STB 300 stopped playing back.

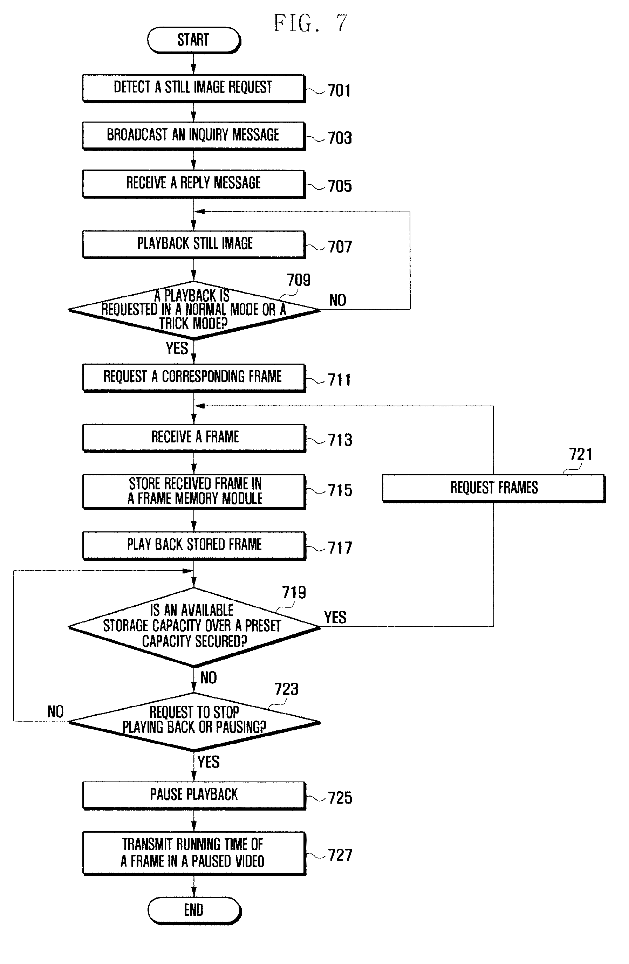

FIG. 7 illustrates a flowchart describing a method for resuming playing back videos in a sub STB according to an exemplary embodiment of the present invention.

It is assumed that the main STB 200 and the sub STB 300 have performed a capability negotiation process.

It is also assumed that the main STB 200 pauses playing back the content according to a user's input pause command. In this case, the user may input a request from the sub STB 300, in order to resume playing back the video following the portion of the paused video that the main STB 200 stopped playing back.

Referring to FIG. 7, when the sub STB 300 detects a user's request to resume playing back the video following a portion of the paused video that the main STB 200 stopped playing back at step 701, it broadcasts an inquiry message to search the main STB 200 that displays the still image at step 703. When the main STB 200 receives the inquiry message, it transmits a reply message to the sub STB 300. The reply message contains information that the main STB 200 has paused playing back a video. The reply message also includes an index file 30 of the video and frames required to play back the paused video.

When the sub STB 300 receives the reply message at step 705, it plays back the still image corresponding to the frames included in the received reply message at step 707. The sub STB 300 plays back the same still image as that of the main STB 200, via the display module 350 at step 517 of FIG. 5.

The user views the still image on the display module 350 of the sub STB 300 and may execute the sub STB 300 in a normal mode or a trick mode. When the sub STB 300 detects a user's request to play back the video in a normal mode or a trick mode at step 709, it requests corresponding frames from the main STB 200, referring to the index file 30 at step 711. The main STB 200 extracts the requested frames and transmits them to the sub STB 300. Transmitting the requested frames to the sub STB 300 is performed based on the available storage capacity of the memory module 350 that the sub STB 300 has secured in the capability negotiation process.

The sub STB 300 receives the requested frames by the available storage capacity at step 713, and stores them in the memory module 350 at step 715. Thereafter, the sub STB 300 plays back the stored frames according to the frame order at step 717. The played frames are removed from the memory module 350. In this case, the memory module 350 may re-secure the capacity corresponding to the amount of deleted frames. The sub STB 300 determines whether the available storage capacity is secured to be equal to or greater than a preset capacity at step 719. When the sub STB 300 determines that the available storage capacity has been secured to be equal to or greater than a preset capacity at step 719, it re-requests corresponding frames from the main STB 200 at step 721 and returns to step 713.

On the contrary, when the sub STB 300 determines that the available storage capacity has not been secured to be equal to or greater than a preset capacity at step 719, it determines whether the user inputs a playback stop command or a pause command at step 723.

When the sub STB 300 determines that the user has not input a playback stop command or a pause command at step 723, it returns to step 719. On the contrary, when the sub STB 300 determines that the user has input a playback stop command or a pause command at step 723, it pauses playing back the video at step 725 and transmits the running time of the frame in the paused video to the main STB 200 at step 727. The running time transmitted from the sub STB 300 may be used when the main STB 200 resumes playing back the video following the portion of the video that the sub STB 300 stopped playing back.

As described above, the method and system according to exemplary embodiments of the present invention allow a user to directly play back the corresponding content at a desired time point in a STB that differs from another STB that stores the corresponding content, where the STB and the other STB share contents with each other. This convenient user service encourages the use of STBs and contents.

While the invention has been described with reference to certain exemplary embodiments thereof, it will be understood by those skilled in the art that various changes in form and details may be made therein without departing from the spirit and scope of the invention as defined in the appended claims and their equivalents.

## Claims

1. An apparatus, in a system formed by a second client and at least one first client able of providing a service for resuming video viewing in the first client, the first client comprises a memory module (350) comprising limited available storage capacity, a network interface module (320) for performing network communication, and a playback module (340) for playing back received frames via the network interface module, the apparatus **characterized by** comprising:
an index processor module (330) for receiving an index file comprising running times of respective frames in a video, from the second client, via the network interface module, and for requesting frames from the second client following the frame corresponding to a desired time point, based on the running times of the received index file, according to the available storage capacity, wherein the second client stores a file of the video forming content.

2. The apparatus of claim 1, wherein the memory module temporarily stores index files of the video and part of an entire frame when the video is played back.

3. The apparatus of claim 1, wherein the corresponding frame comprises a paused frame in the video that the second client temporarily stopped playing back.

4. The apparatus of claim 3, wherein the corresponding frames comprise part of the successive frames, which are selected when a trick mode is executed and are not located adjacent to each other.

5. An apparatus, in a system formed by a first client and at least one second client able of providing a service for resuming video viewing, the first client comprises, a storage unit (240) for storing a video and an index file comprising running times of frames in the video, a network interface unit (220) for transmitting the index file and frames to a second client, and a playback unit (250) for playing back the video, the apparatus **characterized by** comprising:
an index processor (230) for extracting frames of the video following the frame corresponding to a desired time point, based on the running times, according to a request of the second client.

6. The first client of claim 5, wherein the corresponding frame comprises a paused frame in the video that the first client temporarily stopped playing back.

7. The first client of claim 5, wherein the corresponding frames, which are not located adjacent to each other, comprise part of successive frames, which are selected when a trick mode is executed.

8. A method performed in an apparatus of a system formed by a second client and at least one first client able of providing a service for resuming video viewing in the first client, the first client receives and plays back the video, the second client stores a file of the video forming content, the method **characterized by** comprising:
receiving an index file comprising running times of respective frames in a video, from the second client, via the network interface module;
requesting corresponding frames from the second client following the frame corresponding to a desired time point, based on the running times of the received index file, according to the available storage capacity in the first client.

9. The method of claim 8, wherein the video comprises a paused video that the second client temporarily stopped playing back.

10. The method of claim 8, wherein the corresponding frames comprise part of successive frames, which are selected when a trick mode is executed and are not located adjacent to each other.

11. A method performed in an apparatus of a system formed by the first client and at least one second client able of providing a service for resuming video viewing, the first client transmits an index file containing running times of respective frames forming the video to a second client, the method **characterized by** comprising:
extracting frames of the video following the frame corresponding to a desired time point based on the running times, according to a request from the second client, and transmitting the frames to the second client.

12. The method of claim 11, wherein the video comprises a paused video that the first client temporarily stopped playing back.

13. The method of claim 11, wherein the corresponding frames comprise part of successive frames, which are selected when a user executes a trick mode and are not located adjacent to each other.
